# EUROPEAN PATENT APPLICATION

(11) **EP 4 464 387 A1**
(43) Date of publication of application: **20.11.2024**
(21) Application number: 23188270.5
(22) Date of filing: 28.07.2023
(51) Int. Cl.: A63B 22/02

(54) **ACTIVE OMNI-DIRECTIONAL MOTION DEVICE**

(30) Priority: 16.05.2023 CN 202310535548
(71) Applicant: Hangzhou Virtual And Reality Technology Co., Ltd., Hangzhou Zhejiang 311121 (CN)
(72) Inventor: WANG, Bo, Hangzhou, Zhejiang, 311121 (CN)
(74) Representative: Ipey

(57) **Abstract**

Disclosed is an active omni-directional motion device. According to the present invention, a foot inertia sensor 31 and a foot optical non-contact sensor are combined to accurately judge an actual moving speed and start and stop time, a chassis magnetic angle sensor is configured to accurately judge a user walking direction 16, and an active chassis 3 is designed to actively cooperate with the user to naturally walk on the chassis in all directions. The adaptation of the device to different heights is optimized, so that the user may use the device without adjusting the device; a sitting posture function is increased, so that the user sits down comfortably without getting off the device, and the sitting action of the user may be detected; the wearing mode of a waist ring is optimized, so that a user may wear a waistband 6 more simply, and fasten the waist ring simply; and a transverse adjustment function of the waist ring is optimized, so that the user may quickly adjust the waist ring to make up for the phenomenon of biased rotation caused by a walking habit of the user.

## Description

### TECHNICAL FIELD

The present invention relates to the technical field of virtual reality, in particular to an active omni-directional motion device.

### BACKGROUND

Nowadays, with the rapid development of leisure and entertainment industry, online games are loved and promoted by users, and numerous terminal simulators for virtual reality environment emerge as the times require to meet the needs of users for a stronger sense of control and immersion. An omni-directional motion device based on a virtual reality (VR) technology is a device that may meet the needs of the users for an omni-directional motion, which enables the users to realize unlimited walking in a VR in a limited space, such as running, rotating, jumping, squatting, and dodging.

China patent announcement No. CN 114564025A (announcement date: May 31, 2022) discloses a virtual walking device and a virtual walking method. The virtual walking device includes an omni-directional movement machine and a foot wearing device. When a user wears the omni-directional movement machine, a load frame body is used to carry out height-adaptive adjustment, and when the user wears the foot wearing device and stands on a running disc, human body posture data is obtained by tracking a human body trunk, displacement data of left and right feet is obtained by tracking the human body feet through a laser sensor, and virtual positions and moving speeds of the feet are respectively obtained according to the displacement data of the left and right feet; according to the virtual positions of the feet, a leg posture is obtained by using an IK (Inverse Kinematics) algorithm to reversely deduce; and finally, the walking action of a virtual character is controlled by using the human body posture data, the moving speeds of the feet and the leg posture. Such product is good in adaptability, and is stable and comfortable in walking, the real walking feeling in the VR is realized by using an inertial sensor and a laser sensor at a foot, and the fitness and immersion degree are good.

However, in the existing market, an omni-directional treadmill of such omni-directional motion device disclosed in CN 114564025A adopts a passive chassis mainly, that is, the chassis will not actively cooperate with the user to move, and the user needs to learn when using the omni-directional motion device to realize relatively natural walking on the device. Most products only support walking and running functions. In addition, the device may be normally used only by carrying out tedious wearing and adjusting steps when in use.

### SUMMARY

In order to solve the technical problems, the present invention provides an active omni-directional motion device which adopts a brand new structure and technology to realize that the device actively cooperates with a user to naturally walk on a chassis in all directions.

The present invention adopts the following technical solution:
An active omni-directional motion device includes an omni-directional movement machine, a foot wearing device, and a motion control system, where the omni-directional movement machine includes a slide bar, a waistband, a connecting rod, a rotating rod, a chassis, and a supporting base, where the rotating rod is capable of rotating 360 degrees around the supporting base through a rotating part of the chassis; the connecting rod is connected to the rotating rod; the slide bar is connected to the connecting rod; the waistband is connected to the slide bar; the chassis is installed on the supporting base; the chassis is an active chassis, and includes a bearing frame, two driving motors, a linkage belt wheel, and a plurality of rows of left driving wheels and right driving wheels, where the left driving wheels and the right driving wheels are in a symmetrical structure; the plurality of rows of the left driving wheels and the right driving wheels are alternatively distributed and rotationally connected to the bearing frame; the two driving motors are respectively linked with the plurality of rows of the left driving wheels and the right driving wheels through the linkage belt wheel and a linkage belt;
the left driving wheels and the right driving wheels respectively include wheel carriers and pinions, where the pinions are installed on the wheel carriers, and are capable of being freely rotating, the pinions partially protrude out of the surfaces of the wheel carriers after installation, and the pinions are obliquely distributed in transverse directions of the wheel carriers;
the motion control system includes a controller and an information feedback system, where the information feedback system includes a foot inertial sensor and a foot optical non-contact sensor which are installed on the foot wearing device, and a chassis magnetic angle sensor installed on the rotating part of the chassis, and the foot inertial sensor and the foot optical non-contact sensor are configured to feed back a motion speed and off-ground data of a human body of a user, and the chassis magnetic angle sensor is configured to feed back a walking direction of the human body of the user; and
the controller controls rotation directions and speeds of the left driving wheels and the right driving wheels driven by the two driving motors according to the motion speed, the off-ground data and the walking direction of the human body of the user, which are fed back, so as to cooperate with the user to move.

Preferably, the wheel carrier is uniformly provided with a plurality of rows of pinions along a circumference, and two adjacent rows of the pinions are distributed in a staggered manner.

Preferably, the pinions are distributed at an included angle of 45 degrees in a transverse direction of the wheel carrier.

Preferably, a sitting posture module is installed on the connecting rod. The sitting position module adopts a foldable seat plate.

Preferably, the foot optical non-contact sensor includes, but not limited to, a physical contact sensor, an infrared distance sensor, a pressure sensor, an ambient light sensor, and a Hall proximity sensor.

Preferably, the chassis magnetic angle sensor includes, but not limited to, an optical angle sensor, a Hall proximity sensor, an ambient light sensor, and an infrared distance sensor.

Preferably, the waistband includes a left webbing, a right webbing, a left safety buckle male, a right safety buckle male, a left safety buckle female, a right safety buckle female, a waistband covering surface, a waistband installing piece, a component force plate, and a waistband adjusting piece, where the left webbing and the right webbing are respectively sewed together with the waistband covering surface, the left safety buckle male is threaded on the left webbing, and the right safety buckle male is threaded on the right webbing; and the left safety buckle female and the right safety buckle female are respectively sewed on the component force plate, the waistband covering surface is fixedly installed on the component force plate through a screw, and the waistband installing piece is installed on the component force plate through the waistband adjusting piece.

Preferably, the waistband installing piece includes an adjusting rotating head and an adjusting screw, where the adjusting screw is rotationally connected to the waistband installing piece, and the adjusting screw is in threaded connection with the component force plate.

Preferably, a slide block is connected to the slide bar in a sliding manner, and slides up and down along the slide bar, the waistband is fixedly connected to the slide block, a constant force clockwork spring is connected to the top of the slide bar, and a wire puller hanger plate is correspondingly and fixedly arranged on the slide block, and the wire puller hanger plate is fixedly connected to the tail end of the constant force clockwork spring.

Preferably, a control method of the controller in the motion control system includes an off-ground judgment and a speed judgment, where the foot inertia sensor and the foot optical non-contact sensor are configured to feed back the motion speed and the off-ground data of the human body of the user, and the chassis magnetic angle sensor is configured to feed back the user walking direction;
both feet are on the ground for a period of time, which is regarded as stopping walking, so that the chassis is forced to slow down and stop moving;
both feet are off the ground, which is regarded as jumping, so that the chassis is forced to stop moving; and
when a single foot is off the ground, the foot inertia sensor and the foot optical non-contact sensor are configured to feed back the motion speed and the off-ground data of the human body of the user, the chassis magnetic angle sensor is configured to feed back the user walking direction, and the controller controls the rotation directions and the speeds of the left driving wheels and the right driving wheels driven by the two driving motors, so as to cooperate with the user to move.

The use principle of the present invention is as follows: firstly, the foot inertia sensor, the foot optical non-contact sensor and the chassis magnetic angle sensor are configured to feed back the motion speed, the off-ground data and the walking direction of the human body of the user for the off-ground judgment and the speed judgment;
both feet are on the ground for a period of time, which is regarded as stopping walking, so that the chassis is forced to slow down and stop moving;
both feet are off the ground, which is regarded as jumping, so that the chassis is forced to stop moving; and
when a single foot is off the ground, the foot inertia sensor is configured to feed back the acceleration direction and the acceleration value of the foot movement of the user obtained, the current speed is fitted based on Kalman filtering and a convolution algorithm, the chassis magnetic angle sensor rotates along with a chassis rotating mechanism, and when the orientation of the human body changes, the chassis rotating mechanism is driven, and then the chassis magnetic angle sensor generates data change, so as to obtain the walking direction data of the human body; and the controller controls the rotation directions and speeds of the left driving wheels and the right driving wheels driven by the two driving motors, so as to cooperate with the user to move, that is, the controller controls the two driving motors to drive the left driving wheels and the right driving wheels to drive a single foot of the user which is not off the ground to move in the opposite direction at the same speed according to the moving speed and direction of the single foot of the user which is off the ground.

The present invention has the beneficial effects: (1) the foot inertia sensor and the foot optical non-contact sensor are combined to accurately judge an actual moving speed and start and stop time, and the active omni-directional motion device actively cooperates with the user to naturally walk on the chassis in all directions through the design of the active chassis; (2) the chassis magnetic angle sensor and the chassis rotating mechanism are combined to obtain the walking direction data of the human body, and a corresponding direction dynamic signal is given to the active chassis through an algorithm; (3) the adaptation of the device to different heights is optimized, so that the user may use the device without adjusting the device; (4) the achievement of a sitting posture is increased, so that the user may sit down comfortably without getting off the device, and the sitting action of the user may be detected; and (5) the wearing mode of a waist ring is optimized, so that the user may wear the waistband more simply, and fasten the waist ring simply; and a transverse adjustment function of the waist ring is optimized, so that the user may quickly adjust the waist ring to make up for the phenomenon of biased rotation caused by a walking habit of the user.

### BRIEF DESCRIPTION OF THE DRAWINGS

FIG. 1 is a schematic structural diagram of an omni-directional motion machine according to the present invention;
FIG. 2 is a schematic structural diagram of an active chassis according to the present invention;
FIG. 3 is a schematic structural diagram of a driving wheel according to the present invention;
FIG. 4 is a schematic structural diagram of a wheel carrier according to the present invention;
FIG. 5 is a top view of an active chassis according to the present invention;
FIG. 6 is a schematic structural diagram according to the present invention in which a left driving wheel rotates forward or backward to drive a user to walk;
FIG. 7 is a schematic structural diagram according to the present invention in which a right driving wheel rotates forward or backward to drive a user to walk;
FIG. 8 is a schematic structural diagram according to the present invention in which a left driving wheel and a right driving wheel rotate forward or backward at the same rotating speed in the same direction to drive a user to walk;
FIG. 9 is a schematic structural diagram according to the present invention in which a left driving wheel and a right driving wheel rotate forward or backward at the same rotating speed in opposite directions to drive a user to walk;
FIG. 10 is a front view of a waistband part according to the present invention;
FIG. 11 is a rear view of a waistband part according to the present invention;
FIG. 12 is a view showing a use state of a waistband part according to the present invention;
FIG. 13 is a schematic diagram of a stressed state of a waistband part according to the present invention;
FIG. 14 is a schematic diagram of a stressed state of a user during biased rotation according to the present invention;
FIG. 15 is a schematic structural diagram of a waist ring adjusting piece during adjustment according to the present invention;
FIG. 16 is a schematic structural diagram of a slide bar part according to the present invention;
FIG. 17 is a schematic structural diagram of a shoe cover according to the present invention; and
FIG. 18 is a rear view of FIG. 17.

Reference numerals: 1. supporting base, 2. rotating rod, 3. active chassis, 4. connecting rod, 5. sitting posture module, 6. waistband, 7. slide bar, 8. driving motor, 9. linkage belt wheel, 10, bearing frame, 11. driving wheel, 12. wheel carrier, 13. pinion, 14. left driving wheel, 15. right driving wheel, 16. user walking direction, 17. waistband covering surface, 18. left webbing, 19. right webbing, 20. left safety buckle male, 21. right safety buckle male, 22. left safety buckle female, 23. right safety buckle female, 24. component force plate, 25. waistband installing piece, 26. waistband adjusting piece, 27. top connecting plate, 28. wire puller hanger plate, 29. constant force clockwork spring, 30. shoe cover main body, 31. foot inertial sensor, 32. front strap, 33. rear strap, 34. sole, 35. infrared distance sensor.

### DETAILED DESCRIPTION OF THE EMBODIMENTS

The technical solution of the present invention is further described in detail below through specific embodiments and in combination with the accompanying drawings.

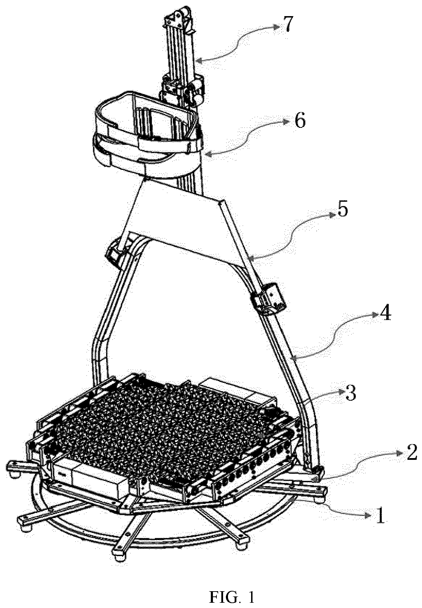

The embodiment is as follows: as shown in FIG. 1, an active omni-directional motion device includes a slide bar 7, a waistband 6, a sitting posture module 5, a connecting rod 4, a rotating rod 2, an active chassis 3, and a supporting base 1, where the rotating rod is capable of rotating by 360 degrees around the supporting base; the connecting rod is connected to the rotating rod; the sitting posture module and the slide bar are connected to the connecting rod; the waistband is connected to the slide bar; and a motion base is installed on the supporting base.

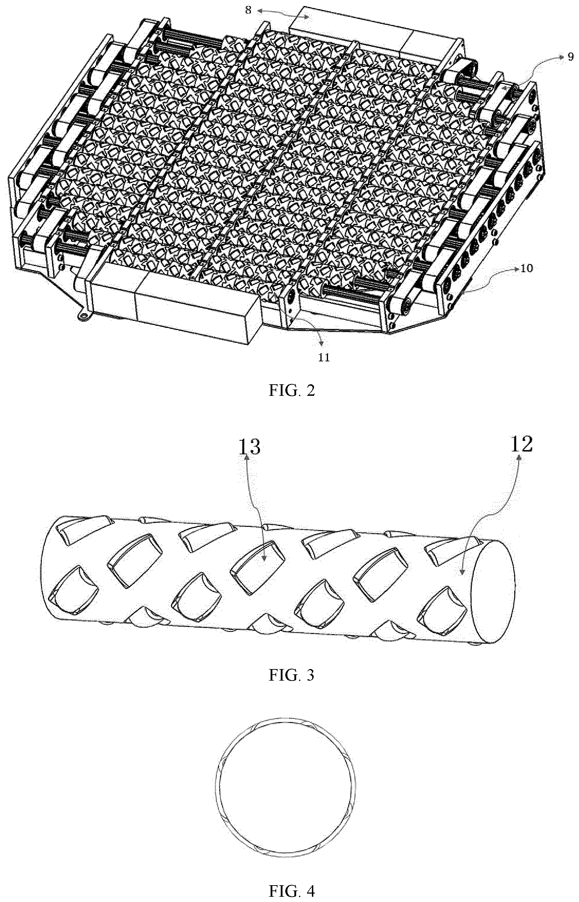

As shown in FIG. 2, the active chassis mainly includes a bearing frame 10, two driving motors 8, a linkage belt wheel 9, and driving wheels 11, where the driving wheels include a plurality of rows of left driving wheels and right driving wheels, and the left driving wheels and the right driving wheels are in a symmetrical structure; the bearing frame mainly provides a supporting and limiting function for related parts; and the plurality of rows of the left driving wheels and the right driving wheels are alternatively distributed and rotationally connected to the bearing frame, and the two driving motors are respectively linked with the plurality of rows of the left driving wheels and the right driving wheels through the linkage belt wheel and a linkage belt.

As shown in FIG. 3, the left driving wheels and the right driving wheels respectively include wheel carriers 12 and pinions 13, where the pinions are installed on the wheel carriers and are capable of freely rotating, and the pinions protrude out of the wheel carriers after installation, so as to prevent soles of the user from stepping on the wheel carriers; and the pinions are distributed at an included angle of 45 degrees in transverse directions of the wheel carriers, so as to ensure that the soles may be in contact with the pinions when the driving wheels rotate to any angle. As shown in FIG. 4, the cross sections of the pinions are circular, so as to prevent the soles from shaking when in use.

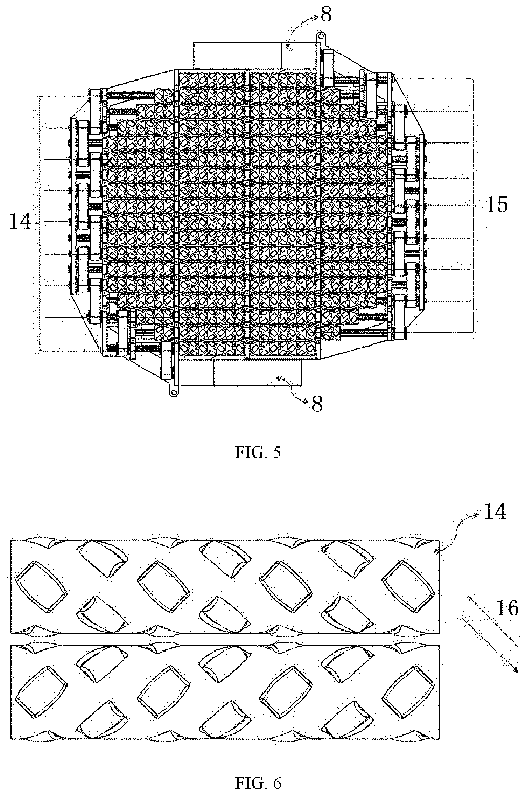

As shown in FIG. 5, the two driving motors respectively drive all the left driving wheels 14 and the right driving wheels 15 to rotate through the linkage belt wheel and the linkage belt.

As shown in FIG. 6, when the left driving wheels rotate forward or backward, the user will be driven to walk forward or backward along the direction pointed by an arrow, that is, the direction pointed by the arrow is a user walking direction 16 driven by the active chassis in active cooperation.

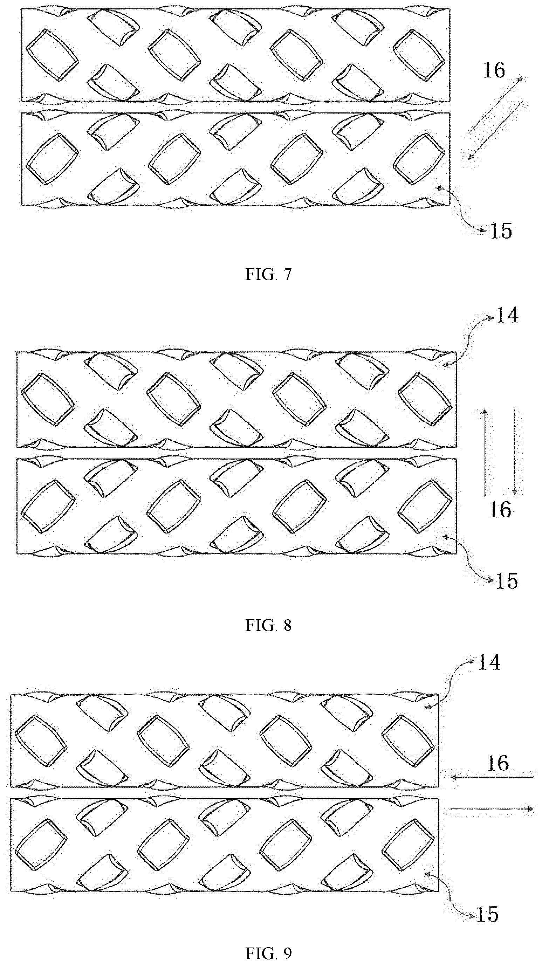

As shown in FIG. 7, when the right driving wheels rotate forward or backward, the user will be driven to walk forward or backward along the direction pointed by an arrow.

As shown in FIG. 8, when the left driving wheels and the right driving wheels rotate forward or backward at the same rotating speed in the same direction simultaneously, the user will be driven to walk forward or backward in the direction pointed by an arrow.

As shown in FIG. 9, when the left driving wheels and the right driving wheels rotate forward or backward at the same rotating speed in opposite directions simultaneously, the user will be driven to walk forward or backward in the direction pointed by an arrow.

When the left driving wheels and the right driving wheels rotate at different speeds simultaneously, the user will be driven to walk along different angle directions according to different rotation directions and different rotating speed differences of the driving wheels. That is to say, the active chassis may be controlled to cooperate with the user to naturally walk on the chassis in all directions by rotating the left driving wheels and the right driving wheels in different rotation directions and different rotating speed differences simultaneously.

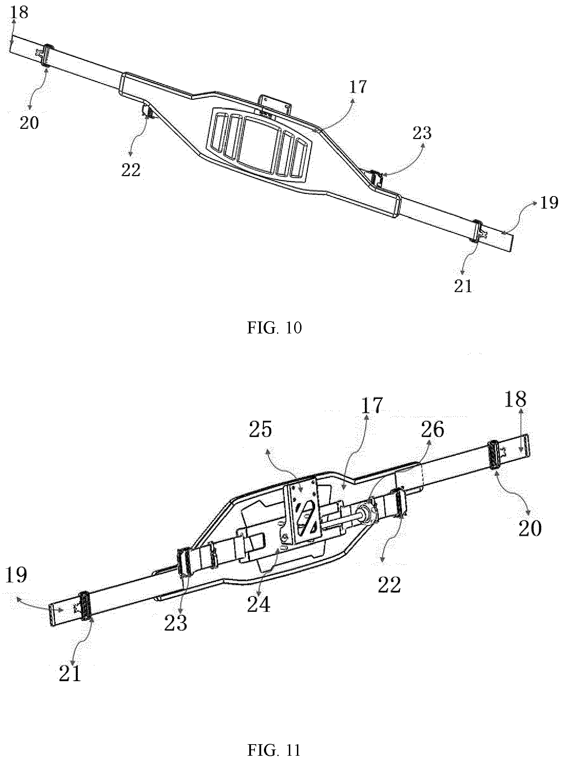

As shown in FIG. 10 and FIG. 11, the waistband includes a left webbing 18, a right webbing 19, a left safety buckle male 20, a right safety buckle male 21, a left safety buckle female 22, a right safety buckle female 23, a waistband covering surface 17, a waistband installing piece 25, a component force plate 24, and a waistband adjusting piece 26, where the left webbing and the right webbing are respectively sewed together with the waistband covering surface, the left safety buckle male is threaded on the left webbing, and the right safety buckle male is threaded on the right webbing; and the left safety buckle female and the right safety buckle female are respectively sewed on the component force plate, the waistband covering surface is installed together with the component force plate through a screw, and the component force plate is assembled together with the waistband installing piece through the waistband adjusting piece.

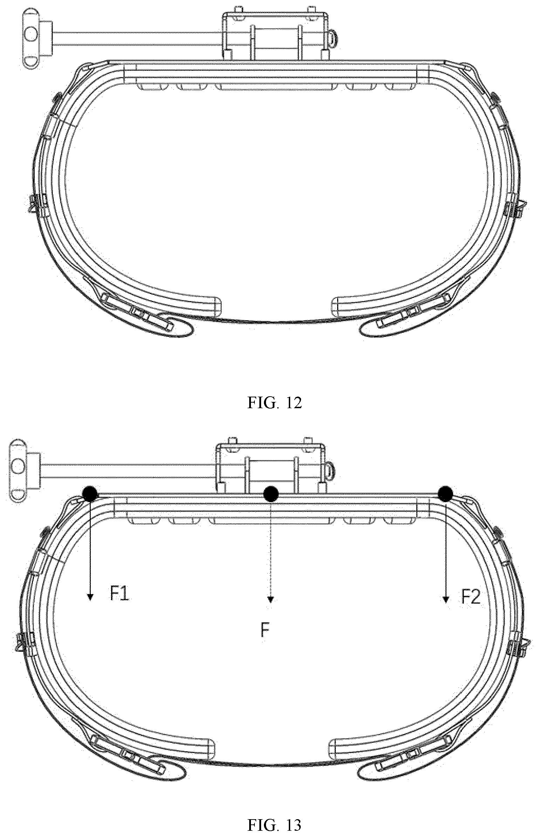

FIG. 12 shows a use state of the waistband. When using the waistband, the user attaches a back waist part to the waistband covering surface, then inserts a left webbing male into the right safety buckle female, inserts a right webbing male into the left safety buckle female, and then tightens the left webbing and the right webbing simultaneously, so that the waistband is completely attached to the body.

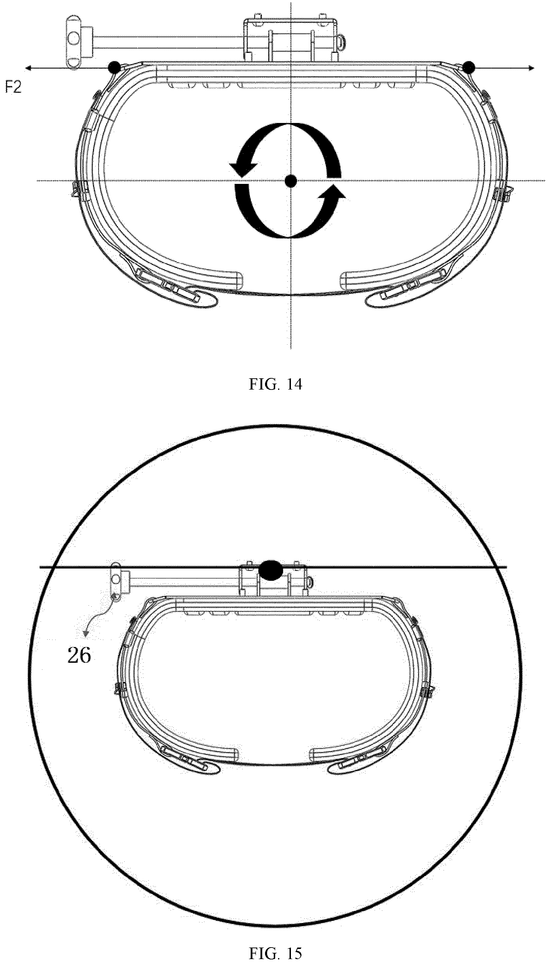

As shown in FIG. 13, when the body of the user applies a force forward, the special waistband is stressed on an installed product from a single point to two sides due to the action of the component force plate, which greatly reduces the uncontrollable rotation of a slewing mechanism of the device due to the uneven stress direction. As shown in FIG. 14, when the body of the user rotates, a pulling force for driving the slewing mechanism is transferred from the center to the side of the component force plate due to the action of the component force plate, so that the user can more easily drive the slewing mechanism to rotate.

As shown in FIG. 15, if the user has a tendency of clockwise or counterclockwise biased rotation during use, a waist ring adjusting piece may be screwed to shift the waistband to the left or right, so that the situation of biased rotation of the device disappears.

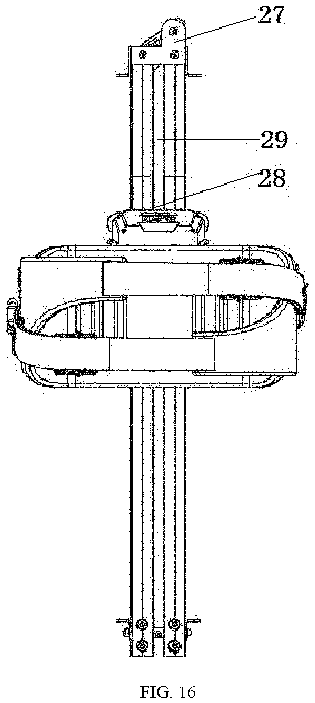

As shown in FIG. 16, a slide block is connected to the slide bar in a sliding manner, and slides up and down along the slide bar, the waistband is fixedly connected to the slide block, a constant force clockwork spring 29 is connected to a top connecting plate 27 at the top of the slide bar, a wire puller hanger plate 28 is correspondingly and fixedly arranged on the slide block, and the wire puller hanger plate is fixedly connected to the tail end of the constant force clockwork spring. The tail end of the constant force clockwork spring fixed in the middle of the top connecting plate is fixedly connected to the wire puller hanger plate, and when the slide block slides up and down, the constant force clockwork spring is driven to be stretched or contracted, so that the load weight of a waist of a person is reduced; and when the person unties the waist ring, because the tension of the constant strength clockwork spring is almost equal to the gravity of the slide block, the slide block may randomly hover at any height.

A foot inertia sensor and a foot optical non-contact sensor are installed on the foot wearing device; a chassis magnetic angle sensor is installed on the rotating part of the chassis; and the foot inertia sensor and the foot optical non-contact sensor are configured to feed back a motion speed and off-ground data of the human body of the user, and the chassis magnetic angle sensor is configured to feed back a walking direction of the human body of the user.

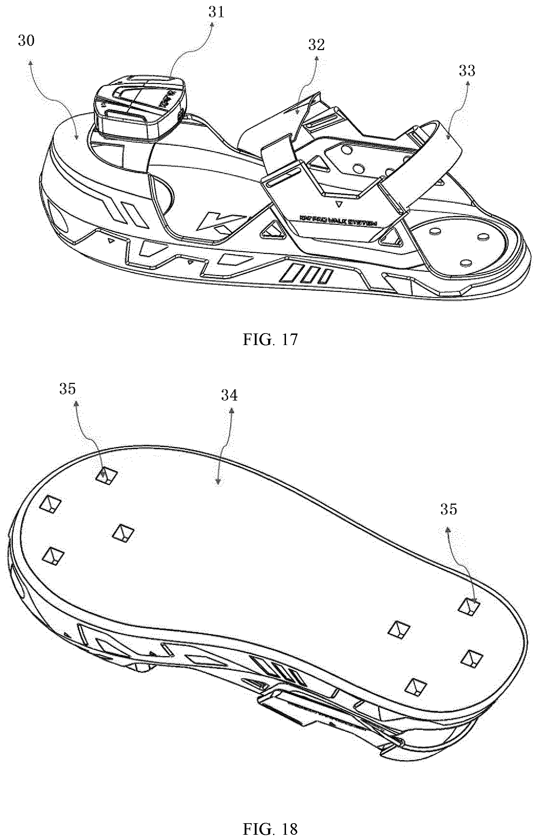

As shown in FIG. 17 and FIG. 18, the foot wearing device adopts a shoe cover, which includes a shoe cover main body 30, a front strap 32, a rear strap 33, and a sole 34. The foot inertia sensor 31 is installed on the shoe cover main body, the foot optical non-contact sensors are respectively arranged on the front and rear sides of the sole, and the foot optical non-contact sensors adopt infrared distance sensors 35.

When the active omni-directional motion device is used, firstly, the foot inertia sensor, the foot optical non-contact sensor and the chassis magnetic angle sensor are configured to feed back the motion speed, the off-ground data and the walking direction of the human body of the user for an off-ground judgment and a speed judgment:
both feet are on the ground for a period of time, which is regarded as stopping walking, so that the chassis is forced to slow down and stop moving;
both feet are off the ground, which is regarded as jumping, so that the chassis is forced to stop moving; and
when a single foot is off the ground, the foot inertia sensor is configured to feed back the acceleration direction and the acceleration value of the foot movement of the user obtained, the current speed is fitted based on Kalman filtering and a convolution algorithm, the chassis magnetic angle sensor rotates along with a chassis rotating mechanism, and when the orientation of the human body changes, the chassis rotating mechanism is driven, and then the chassis magnetic angle sensor generates data change, so as to obtain the walking direction data of the human body; and the controller controls the rotation directions and speeds of the left driving wheels and the right driving wheels driven by the two driving motors, so as to cooperate with the user to move, that is, the controller controls the two driving motors to drive the left driving wheels and the right driving wheels to drive a single foot of the user which is not off the ground to move in the opposite direction at the same speed according to the moving speed and direction of the single foot of the user which is off the ground.

The above embodiment is only a preferred solution of the present invention, and is not intended to limit the present invention in any form, and other variations and modifications may be made on the premise of not exceeding the technical solution described in the claims.

## Claims

1. An active omni-directional motion device, comprising an omni-directional movement machine, a foot wearing device, and a motion control system, the omni-directional movement comprising a slide bar (7), a waistband (6), a connecting rod (4), a rotating rod (2), a chassis, and a supporting base (1), the rotating rod (2) being capable of rotating by 360 degrees around the supporting base (1) through a rotating part of the chassis, the connecting rod (4) being connected to the rotating rod (2), the slide bar (7) being connected to the connecting rod (4), the waistband (6) being connected to the slide bar (7), and the chassis being installed on the supporting base (1), **characterised in that** the chassis is an active chassis (3), and comprises a bearing frame (10), two driving motors (8), a linkage belt wheel (9), and a plurality of rows of left driving wheels (14) and right driving wheels (15), and the left driving wheels (14) and the right driving wheels (15) are in a symmetrical structure; the plurality of rows of the left driving wheels (14) and the right driving wheels (15) are alternatively distributed and rotationally connected to the bearing frame (10), and the two driving motors (8) are respectively linked with the plurality of rows of the left driving wheels (14) and the right driving wheels (15) through the linkage belt wheel (9) and a linkage belt;
the left driving wheels 14 and the right driving wheels (15) respectively comprise wheel carriers (12) and pinions (13), the pinions (13) are installed on the wheel carriers (12), and are capable of freely rotating, the pinions (13) partially protrude out of the surfaces of the wheel carriers (12) after installation, and the pinions (13) are obliquely distributed in transverse directions of the wheel carriers (12);
the motion control system includes a controller and an information feedback system, the information feedback system comprises a foot inertial sensor (31) and a foot optical non-contact sensor which are installed on the foot wearing device, and a chassis magnetic angle sensor installed on the rotating part of the chassis, the foot inertial sensor (31) and the foot optical non-contact sensor are configured to feed back a motion speed and off-ground data of a human body of a user, and the chassis magnetic angle sensor is configured to feed back a walking direction of the human body of the user; and
the controller controls rotation directions and speeds of the left driving wheels (14) and the right driving wheels (15) driven by the two driving motors (8) according to the motion speed, the off-ground data and the walking direction of the human body of the user, which are fed back, so as to cooperate with the user to move.

2. The active omni-directional motion device according to claim 1, **characterised in that** the wheel carrier (12) is uniformly provided with a plurality of rows of pinions (13) along a circumference, and two adjacent rows of the pinions (13) are distributed in a staggered manner.

3. The active omni-directional device according to claim 1, **characterised in that** the pinions (13) are distributed at an included angle of 45 degrees in a transverse direction of the wheel carrier (12).

4. The active omni-directional motion device according to claim 1, **characterised in that** a sitting posture module (5) is installed on the connecting rod (4).

5. The active omni-directional motion device according to claim 1, **characterised in that** the foot optical non-contact sensor comprises, but not limited to, a physical contact sensor, an infrared distance sensor (35), a pressure sensor, an ambient light sensor, and a Hall proximity sensor.

6. The active omni-directional motion device according to claim 1, **characterised in that** the chassis magnetic angle sensor comprises, but not limited to, an optical angle sensor, a Hall proximity sensor, an ambient light sensor, and an infrared distance sensor (35).

7. The active omni-directional device according to claim 1, **characterised in that** the waistband (6) comprises a left webbing (18), a right webbing (19), a left safety buckle male (20), a right safety buckle male (21), a left safety buckle female (22), a right safety buckle female (23), a waistband covering surface (17), a waistband installing piece (25), a component force plate (24), and a waistband adjusting piece (26), the left webbing (18) and the right webbing (19) being respectively sewed together with the waistband covering surface (17), the left safety buckle male (20) being threaded on the left webbing (18), the right safety buckle male (21) being threaded on the right webbing (19), the left safety buckle female (22) and the right safety buckle female (23) being respectively sewed on the component force plate (24), the waistband covering surface (17) being fixedly installed on the component force plate (24) through a screw, and the waistband installing piece (25) being installed on the component force plate (24) through the waistband adjusting piece (26).

8. The active omni-directional motion device according to claim 7, **characterised in that** the waistband installing piece (25) comprises an adjusting rotating head and an adjusting screw, the adjusting screw being rotationally connected to the waistband installing piece (25) and being in threaded connection with the component force plate (24).

9. The active omni-directional motion device according to claim 1, **characterised in that** a slide block is connected to the slide bar (7) in a sliding manner, and slides up and down along the slide bar (7), the waistband (6) is fixedly connected to the slide block, a constant force clockwork spring (29) is connected to the top of the slide bar (7), a wire puller hanger plate (28) is correspondingly and fixedly arranged on the slide block, and the wire puller hanger plate (28) is fixedly connected to the tail end of the constant force clockwork spring (29).

10. The active omni-directional motion device according to claim 1, **characterised in that** a control method of the controller in the motion control system comprises an off-ground judgment and a speed judgment, the foot inertia sensor (31) and the foot optical non-contact sensor are configured to feed back the motion speed and the off-ground data of the human body of the user, and the chassis magnetic angle sensor is configured to feed back the user walking direction;
both feet are on the ground for a period of time, which is regarded as stopping walking, so that the chassis is forced to slow down and stop moving;
both feet are off the ground, which is regarded as jumping, so that the chassis is forced to stop moving; and
when a single foot is off the ground, the foot inertia sensor (31) and the foot optical non-contact sensor are configured to feed back the motion speed and the off-ground data of the human body of the user, the chassis magnetic angle sensor is configured to feed back the user walking direction, and the controller controls the rotation directions and the speeds of the left driving wheels (14) and the right driving wheels (15) driven by the two driving motors (8), so as to cooperate with the user to move.
